# EUROPEAN PATENT SPECIFICATION

(11) **EP 2 920 422 B1**
(45) Date of publication and mention of the grant of the patent: **05.05.2021**
(21) Application number: 13828808.9
(22) Date of filing: 21.10.2013
(51) Int. Cl.: F01C 21/08, F04C 2/344

(54) **VANE ROTOR FOR A ROTARY VOLUMETRIC PUMP**
FLÜGELZELLENROTOR FÜR EINE VOLUMETRISCHE DREHPUMPE
ROTOR À PALETTES POUR UNE POMPE VOLUMÉTRIQUE ROTATIVE

(30) Priority: 26.10.2012 IT TO20120943
(43) Date of publication of application: 23.09.2015
(73) Proprietor: VHIT S.p.A., 26010 Offanengo (CR) (IT)
(72) Inventor: CORTESI, Matteo, 26010 Offanengo (CR) (IT); STAGNOLI, Luca, 26010 Offanengo (CR) (IT); VIVIURKA, Joao, 26010 Offanengo (CR) (IT)
(74) Representative: Robba, Pierpaolo
(86) International application number: PCT/IB2013/059496
(87) International publication number: WO 2014/064594

(56) References cited:
- WO-A1-2009/139270
- DE-B- 1 106 604
- GB-A- 2 486 007
- US-A1- 2009 104 049
- US-A1- 2009 269 234
- US-A1- 2009 285 709
- US-A1- 2009 291 000
- US-A1- 2010 266 434

## Description

### Technical field

This invention relates to rotary positive displacement pumps with vane rotor, and more particularly it concerns a rotor for one such pump having an improved shape of the vane seats.

The invention also concerns a rotary positive displacement pump equipped with such a rotor.

### Background of the invention

In pumps with vane rotor, the vanes are inserted in the rotor in seats consisting of radial slots suitably shaped so as to allow an easy mounting and to ensure the proper support during rotation.

Especially the shape of the inner end portion of the vane seats is a critical element in rotor design, taking into account the stresses induced by the press fitting of the drive shaft and by the subsequent pump operation. In particular, such a shape conditions the rotor strength and demands that particular attention is paid to the definition of the minimum thickness between the bore where the drive shaft is press fitted (internal diameter of the rotor) and the inner end portion of the vane seats. It is necessary to have a minimum thickness such that the maximum design torque can be transmitted without breaking both during the press fitting step and during operation.

Usually, at said inner end portion, the vane seats are widened so as to form a zone with substantially circular cross section. The provision of such a widened zone aims, *inter alia,* at offering a discharge path for oil present inside the slots themselves so that the radial movements of the vanes are not hindered. An example of such a conventional shape of the vane seats is shown in DE 10 2007 018 692 A1.

Yet, vane seats with an end portion with circular cross section create a zone where overstressing and stress intensification take place, due, *inter alia,* to the reduced radius of curvature at such portion. Consequently, the thickness between the bottom of the vane seats and the internal diameter of the rotor required in order to ensure a sufficient resistance to stresses under load must be relatively high. On the other hand, in turn, the drive shaft cannot have a thickness smaller than a given minimum, in order to offer the desired mechanical strength in operation. Consequently, the overall rotor size cannot become smaller than a certain value. It is clear that this compels to limit the pump displacement if a given pump size is to be maintained, or to make more cumbersome pumps if a given displacement is desired.

Document DE 1106604B discloses a capsule pump having a rotor in which a drive shaft is integrally formed, and vanes sliding in radial slots of the rotor.

### Description of the invention

It is an object of the invention to provide a rotor for a rotary positive displacement pump obviating the drawbacks of the prior art.

According to the invention, this is obtained in that the widened end portion of each seat has a cross-sectional profile consisting of a pair of first arcs having their radially outer ends joined with a respective wall of the same seat and arranged with facing concavities, and of a connecting portion connecting the radially inner ends of said first arcs.

The provision of the connecting portion results in the first arcs being spaced apart by a certain angle (recess angle) from the radius of the rotor comprising the axis of the vane seat.

According to preferred features of the invention, the connecting portion consists of a second arc having the convexity directed towards the inside of the widened portion and having a radius greater than the radius of the first arcs. Advantageously, the second arcs in the bottoms of all seats belong to a same circumference.

By the solution according to the invention, it is possible to reduce the maximum stress acting onto the innermost portion of the vane seats, which stress is generated during the press fitting step. Such a reduction in the maximum stress increases as the recess angle increases.

The reduction in the maximum stress achieved through geometrical improvements (and not by employing materials with higher performance, which would entail higher costs) offers the possibility of allowing freely changing the shaft size with a greater freedom than in rotors with vane seats of conventional shape. In particular, it would be possible to employ a shaft with greater size than in a rotor not equipped with the invention, so that the pump is capable of withstanding higher stresses, or even to employ a smaller shaft should the pump have a smaller displacement. In case of use of a shaft with greater size, the advantage that can be attained is of about the same order of magnitude as the reduction in the maximum stresses.

According to another aspect of the invention, a pump using the improved rotor is also provided.

### Brief Description of the Figures

The above and other features and advantages of the present invention will become apparent from the following description of preferred embodiments made by way of non limiting example with reference to the accompanying Figures, in which:
- Fig. 1 is a schematic cross-sectional view of a conventional rotor;
- Fig. 2 is an enlarged schematic view of part of a rotor in which the vane seats are made in accordance with the invention;
- Figs. 3A to 3C are enlarged views of vane seats with different values of the recess angle;
- Fig. 4A and 4B are diagrams showing the distribution of the maximum stresses after press fitting of the drive shaft without and with use of the invention, respectively;
- Figs. 5 to 7 are graphs of the distribution of the maximum stresses, the maximum transmissible torque and the tangential deformation, respectively, versus the recess angle; and
- Figs. 8 and 9 are schematic views of two pumps in which the invention is applied.

### Detailed description of a preferred embodiment

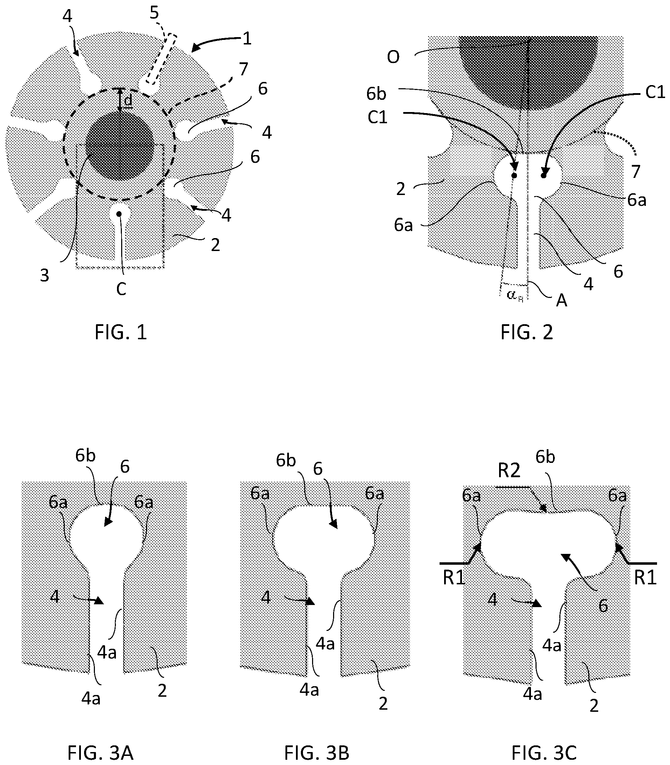

As shown in Fig. 1, a vane rotor 1 can be schematised as a substantially cylindrical body 2 having an axial bore into which drive shaft 3 is press fitted. A plurality of radial slots 4, identical to one another and regularly distributed along the circumference of body 2, are formed in body 2 and accommodate vanes 5, only one of which is schematically shown in dashed lines. Such slots 4 have, at their bottom, a widened portion 6 that, according to the conventional technique depicted in the Figure, has a circular cross section with centre C. Circular portions 6 can be considered as being externally tangent to a same circumference 7 whose distance d from the internal diameter of the rotor, for a given external size and/or a given displacement of the pump, is imposed by the characteristics of resistance to stresses rotor 1 must have.

Figs. 2 and 3A to 3C show that, according to the invention, the cross sectional shape of widened portion 6 of each slot 4, instead of being circular, is defined by a pair of first arcs of circumference 6a, which are arranged with facing concavities (i.e. concavities directed towards the inside of bottom 6) and have radially outer ends joined with a respective wall 4a of the same slot, and by a connecting portion 6b joining the radially inner ends of arcs 6a and symmetrically extending at both sides of axis A of slot 4.

Both arcs 6a substantially are semi-circumferences corresponding each to half the cross section of the conventional circular bottom shown in Fig. 1, and they have a first radius R1. Due to the presence of connecting portion 6b, centres C1 of arcs 6a are at a certain distance from the axis of slot 4. Such a distance can be measured by the so-called recess angle α_{R}, defined for instance as the angle between the radius of the rotor passing through point C1 and the radius containing axis A. The numerical values discussed below refer to such a definition.

As it will be discussed below, the amplitude of recess angle α_{R} determines the percentage of maximum stress reduction, said percentage increasing as angle α_{R} increases.

According to the invention, the absolute value of angle α_{R} can range from a minimum α_{R}(min) > 0° (0° clearly corresponding to the conventional circular shape) to a maximum α_{R}(max), corresponding to the value at which the material between two adjacent seats no longer would be capable of withstanding stresses coming from the vanes. Such a maximum cannot be precisely defined since, besides depending on the rotor material, it obviously depends on the number of vanes, the diameter of the drive shaft, the stresses the rotor undergoes during operation, and so on.

According to the invention shown in the drawings, connecting portion 6b is an arc of circumference the convexity of which faces the inside of bottom 6, and it has a radius R2 that advantageously is greater than radius R1 of arcs 6a. All arcs 6b belong to circumference 7.

By such an arrangement, arcs 6b of each bottom 6 have substantially the same direction of curvature as shaft 3, and this allows improving the stress state distribution inside the material.

Moreover, thanks to the shape of arcs 6b, a maximum reduction of the notch effect is achieved.

The diagrams of the Von Mises stress in Figs, 4A and 4B clearly show the effect of the invention on the distribution of the maximum stresses resulting from the press fitting of the shaft.

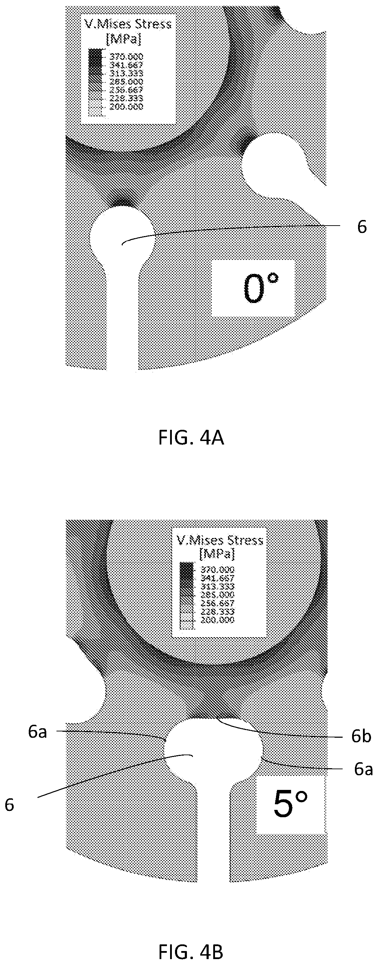

More particularly, Fig. 4A, relating to a conventional seat (recess angle 0°), shows a strong stress concentration at the "vertex" of the bottom, that is at the tangency point between the bottom and circumference 7. As mentioned, this is due to the fact that in such a zone the concavity of the bottom opposes the convexity of the shaft and hence creates zones where the radius of curvature varies. Fig. 4B, relating to a recess angle of 5°, shows on the contrary that the zones of strong stress concentration are greatly reduced and that the stresses have a more homogeneous distribution within the whole component.

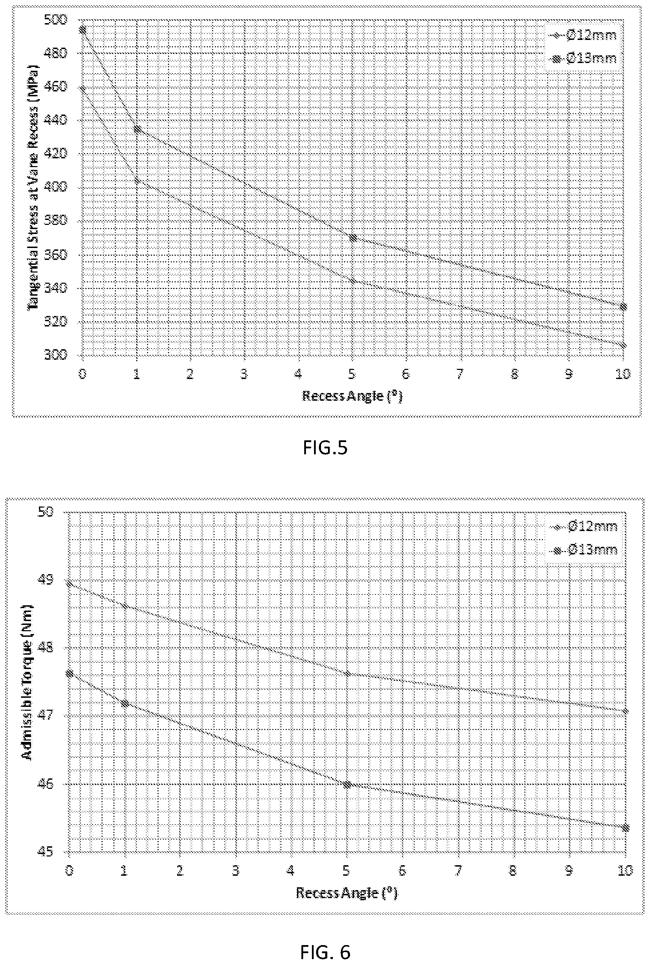

In the graph shown in Fig. 5, the values of the tangential stress at bottom 6 of slots 4, i.e. at circumference 7, are reported versus recess angle α_{R} for two different values of the diameter of shaft 3, namely 12 mm and 13 mm. The graph clearly shows that, already at very small values of the recess angle, the invention results in a considerable reduction of the tangential stress at bottom 6 with respect to the conventional solution with cylindrical bottom 6. More particularly, it can be appreciated that such a reduction, for recess angles in a range 1° to 10°, ranges from about 15% (α_{R} = 1°) to about 35% (α_{R} = 10°). Such a reduction is substantially independent of the shaft diameter, as it can be seen from the graph.

The graph in Fig. 6, showing the values of the maximum transmissible torque versus recess angle α_{R} for the same two values of the diameter of shaft 3 as considered in Fig. 5, shows that the widening of bottom 6 of the vane seats entails a certain reduction in the maximum transmissible torque with respect to the seat with conventional shape, said reduction increasing as recess angle α_{R} increases. Yet, the graph shows that such a reduction is very limited (from less than 1% for the angle of 1° to 4% - 4.5% for the angle of 10°) for both values of the diameter of shaft 3, and therefore it can be accepted without problems taking into account the strong gain in terms of stress reduction and hence in terms of mechanical strength achieved by the invention.

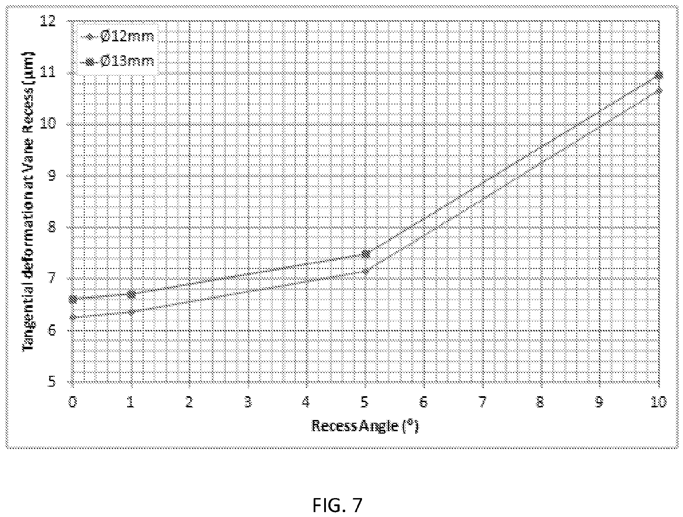

The graph in Fig. 7 shows in turn the values of the tangential deformation (defined as the difference between the external circumference of the rotor - where external circumference of the rotor means here the circumference in correspondence of bottom 6 of slots 4, that is in correspondence of circumference 7 - before and after press fitting of shaft 3) versus recess angle α_{R}. The graph shows that the invention, always considering recess angles of up to 10° and the same values of the diameter of shaft 3 as considered in Figs. 5 and 6, causes a considerable increase in the tangential deformation with respect to the conventional circular shape. This increase rapidly rises for values of α_{R} > 5° and arrives at values higher than 50% for the angle of 10°. Such an increase is to be taken into account when designing the pump, in particular the vanes, since it may cause an increase in radial oil leaks between the vane sides and the walls of the vane seats. It is therefore to be evaluated whether and how much an increase in the radial leaks can be tolerated and, if necessary, the vanes should be suitably sized.

In view of the above, a solution representing a good trade-off between the advantages resulting from the mechanical strength increase and the drawbacks due to the decrease of the transmissible torque and the possible increase in radial oil leaks is given by a recess angle in a range 3 to 6°, for instance an angle of about 5°.

The invention can be applied to any kind of positive displacement pump with vane rotor, with fixed or variable displacement, for instance to pumps for the lubrication oil of a vehicle engine, and it is of particular interest for pumps where at least the rotor and the vanes are made of sintered, plastic or fibre-reinforced plastic material.

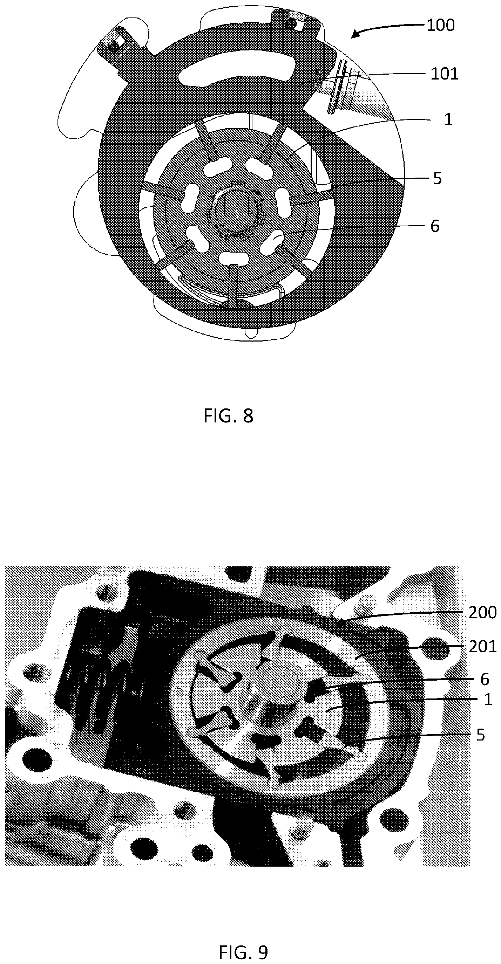

Figs. 8 and 9 show the application of the invention to two variable displacement pumps. Namely, Fig. 8 shows a pump 100 of the kind where displacement adjustment is obtained through the rotation of a stator ring 101 having an internal cavity 102 within which rotor 1 rotates, whereas Fig. 9 shows a pump 200 of the kind known as "pendulum pump" or "pendelschieber pump", where rotor 1, while rotating, causes rotation of an external ring 201 in which the radially outer end of vanes 5 is hinged.

It will be apparent for the skilled in the art that the invention can be applied also in combined pumps, that is pump combinations where at least one pump is a rotary positive displacement pump of the kind considered here, or in ancillary groups, that is groups of components, not necessarily all hydraulic components, comprising at least one rotary positive displacement pump of the kind considered here.

It is clear that the above description is given only by way of non-limiting example and that changes and modifications are possible without departing from the scope of the invention as defined in the following claims.

## Claims

1. Vane rotor for a rotary pump to be driven by a drive shaft (3), the rotor comprising a substantially cylindrical body (2) with an axial bore having an internal diameter and into which a drive shaft is to be press fitted for driving the vane rotor, wherein
said vane rotor comprises a plurality of radial slots (4) each forming a seat for a vane (5) and ending, at a radially inner end, with a widened blind bottom (6), wherein
said widened blind bottom (6) has a cross-sectional profile which is defined by a pair of first arcs (6a) arranged with facing concavities and having radially outer ends joined with a respective wall (4a) of the slot, and by a connecting portion (6b) connecting radially inner ends of said first arcs (6a), said bottom (6) having a curvature of the connecting portion (6b) having substantially the same direction of curvature as the press-fitted drive shaft (3), wherein
said connecting portion (6b) is a further arc having the convexity directed towards the inside of the widened bottom (6), the arcs (6b) of all seats (4) of the vanes (5) belonging to a same circumference (7), and wherein
an angle (α_{R}) greater than 0° exists between a radius of the rotor (1) passing through a centre (C1) of a first arc (6a) and a radius containing an axis (A) of said slots (4), said angle (α_{R}) having an amplitude of less than 10°.

2. The rotor as claimed in claim 1, **characterised in that** said angle (α_{R}) has an amplitude in the range from 3° to 6°.

3. The rotor as claimed in claim 2, **characterised in that** said angle (α_{R}) has an amplitude of 5°.

4. The rotor as claimed in claim 1, **characterised in that** the further arc (6b) has a radius (R2) greater than the radius (R1) of said first arcs (6).

5. The rotor as claimed in any one of claims 1 to 4 **characterised in that** it is made of sintered, plastic or fibre-reinforced plastic material.

6. A rotary pump, **characterised in that** it comprises a rotor (1) as claimed in any one of preceding claims.

7. The rotary pump as claimed in claim 6, **characterised in that** the rotor (1) is made of sintered, plastic or fibre-reinforced plastic material.

## Patentansprüche

1. Flügelrotor für eine Drehkolbenpumpe, der von einer Antriebswelle (3) angetrieben werden soll, wobei der Rotor einen im Wesentlichen zylindrischen Körper (2) mit einer axialen Bohrung umfasst, die einen Innendurchmesser aufweist und in die eine Antriebswelle zum Antrieb des Flügelrotors pressgepasst werden soll, wobei
der Flügelrotor mehrere radiale Schlitze (4) umfasst, die jeweils einen Sitz für einen Flügel (5) bilden und an einem radial inneren Ende mit einem breiteren Sackboden (6) enden, wobei
der breitere Sackboden (6) ein Querschnittsprofil aufweist, das durch ein Paar erster Bögen (6a), die mit zueinander weisenden Konkavitäten angeordnet sind und radial äußere Enden, die mit einer jeweiligen Wand (4a) des Schlitzes verbunden sind, aufweisen, und durch einen Verbindungsabschnitt (6b), der radial innere Enden der ersten Bögen (6a) verbindet, definiert wird, wobei der Boden (6) eine Krümmung des Verbindungsabschnitts (6b) mit im Wesentlichen derselben Krümmungsrichtung wie die pressgepasste Antriebswelle (3) aufweist, wobei
der Verbindungsabschnitt (6b) ein weiterer Bogen mit zum Inneren des breiteren Bodens (6) gerichteter Konvexität ist, wobei die Bögen (6b) aller Sitze (4) der Flügel (5) zum selben Umfang (7) gehören, und wobei ein Winkel (α_{R}) von mehr als 0° zwischen einem Radius des Rotors (1), der durch eine Mitte (C1) eines ersten Bogens (6a) hindurchgeht, und einem Radius, der eine Achse (A) der Schlitze (4) enthält, vorliegt, wobei der Winkel (α_{R}) eine Amplitude von weniger als 10° aufweist.

2. Rotor nach Anspruch 1, **dadurch gekennzeichnet, dass** der Winkel (α_{R}) eine Amplitude im Bereich von 3° bis 6° aufweist.

3. Rotor nach Anspruch 2, **dadurch gekennzeichnet, dass** der Winkel (α_{R}) eine Amplitude von 5° aufweist.

4. Rotor nach Anspruch 1, **dadurch gekennzeichnet, dass** der weitere Bogen (6b) einen Radius (R2) aufweist, der größer als der Radius (R1) der ersten Bögen (6) ist.

5. Rotor nach einem der Ansprüche 1-4, **dadurch gekennzeichnet, dass** er aus gesintertem Kunststoff- oder faserverstärktem Kunststoffmaterial hergestellt ist.

6. Drehkolbenpumpe, **dadurch gekennzeichnet, dass** sie einen Rotor (1) nach einem der vorhergehenden Ansprüche umfasst.

7. Drehkolbenpumpe nach Anspruch 6, **dadurch gekennzeichnet, dass** der Rotor (1) aus gesintertem Kunststoff- oder faserverstärktem Kunststoffmaterial hergestellt ist.

## Revendications

1. Rotor à palettes pour une pompe rotative, prévu pour être entraîné par un arbre d'entraînement (3), le rotor comprenant un corps substantiellement cylindrique (2) avec un alésage axial ayant un diamètre intérieur et dans lequel doit être enfoncé par ajustement serré un arbre d'entraînement pour entraîner le rotor à palettes,
ledit rotor à palettes comprenant une pluralité de fentes radiales (4) formant chacune un siège pour une palette (5) et se terminant au niveau d'une extrémité radialement intérieure, avec un fond aveugle élargi (6),
ledit fond aveugle élargi (6) présentant un profil en section transversale qui est défini par une paire de premiers arcs (6a) agencés avec des concavités en regard et ayant des extrémités radialement extérieures réunies à une paroi respective (4a) de la fente, et par une portion de connexion (6b) reliant des extrémités radialement intérieures desdits premiers arcs (6a), ledit fond (6) ayant une courbure de la portion de connexion (6b) ayant sensiblement la même direction de courbure que l'arbre d'entraînement enfoncé par ajustement serré (3),
ladite portion de connexion (6b) étant un arc supplémentaire dont la convexité est orientée vers l'intérieur du fond élargi (6), les arcs (6b) de tous les sièges (4) des palettes (5) appartenant à la même circonférence (7), et
un angle (α_{R}) supérieur à 0° existant entre un rayon du rotor (1) passant à travers un centre (C1) d'un premier arc (6a) et un rayon contenant un axe (A) desdites fentes (4), ledit angle (α_{R}) ayant une amplitude inférieure à 10°.

2. Rotor selon la revendication 1, **caractérisé en ce que** ledit angle (α_{R}) présente une amplitude dans la plage de 3° à 6°.

3. Rotor selon la revendication 2, **caractérisé en ce que** ledit angle (α_{R}) présente une amplitude de 5°.

4. Rotor selon la revendication 1, **caractérisé en ce que** l'arc supplémentaire (6b) présente un rayon (R2) supérieur au rayon (R1) desdits premiers arcs (6).

5. Rotor selon l'une quelconque des revendications 1 à 4, **caractérisé en ce qu'**il est fabriqué à partir de matière frittée, plastique ou plastique renforcée par des fibres.

6. Pompe rotative **caractérisée en ce qu'**elle comprend un rotor (1) selon l'une quelconque des revendications précédentes.

7. Pompe rotative selon la revendication 6, **caractérisée en ce que** le rotor (1) est fabriqué en matière frittée, plastique ou plastique renforcée par des fibres.
